# EUROPEAN PATENT SPECIFICATION

(11) **EP 0 550 153 B1**
(45) Date of publication and mention of the grant of the patent: **23.07.1997**
(21) Application number: 92310948.2
(22) Date of filing: 01.12.1992
(51) Int. Cl.: H01M 4/38, H01M 4/00

(54) **Hydrogen-absorbing alloy electrode and its manufacturing method**
Elektrode aus einer wasserstoffabsorbierenden Legierung und Verfahren zu ihrer Herstellung
Electrode en alliage absorbant l'hydrogène et méthode de fabrication

(30) Priority: 25.12.1991 JP 343310/91; 10.04.1992 JP 90902/92
(43) Date of publication of application: 07.07.1993
(73) Proprietor: SANYO ELECTRIC CO., LIMITED., Moriguchi City, Osaka (JP)
(72) Inventor: Takee, Masao, Nishinomiya-city, Hyogo (JP); Mizutaki, Fusago, Hirakata-city, Osaka (JP); Nishio, Koji, Hirakata-city, Osaka (JP); Kimoto, Mamoru, Hirakata-city, Osaka (JP); Chikano, Yoshito, Osaka-city, Osaka (JP)
(74) Representative: Allman, Peter John

(56) References cited:
- EP-A- 0 468 568
- PATENT ABSTRACTS OF JAPAN vol. 14, no. 288 (E-943)21 June 1990
- PATENT ABSTRACTS OF JAPAN vol. 16, no. 49 (C-908)7 February 1992

## Description

### BACKGROUND OF THE INVENTION

### 1. Field of the invention

This invention relates to a hydrogen-absorbing alloy electrode used as a negative electrode in an alkaline storage battery.

### 2. Description of the prior art

Alkaline storage batteries, such as Ni-Cd batteries, or lead acid batteries are known. Currently, lighter and larger capacity batteries having high energy density are needed. Therefore, metal hydride storage batteries, using a metal oxide such as a nickel hydroxide as a positive electrode and a hydrogen-absorbing alloy in which hydrogen is absorbed and desorbed reversibly as a negative electrode, are attractive.

The hydrogen-absorbing alloy for the negative electrode should be able to absorb and desorb reversibly at room temperature.

An alloy satisfying such requirements is disclosed in Japanese patent publication laid-open No.60-89066 which describes a hydrogen-absorbing alloy of a Mm-Ni type (where the "Mm", a so-called "Misch Metal", is a mixture of rare earth elements, such as La, Ce, Nd, Pr, etc.). These alloys have been used in practice.

Electrochemical characteristics of the hydrogen-absorbing alloy electrode and the charge characteristics of an alkaline storage battery using the above as a negative electrode depend on various characteristics of the alloy used. Therefore, it is important to research and develop proper hydrogen-absorbing alloys for the electrode.

For example, in a LaNi₅ alloy (a MmNi₅ alloy), partial replacements of La, ("Mm") or Ni by other elements improves the discharge capacity, temperature dependency and charge-discharge cycle life characteristics. Accordingly such replacements are often researched and tested.

When Ni is partially replaced by Co, Cu or the like, a change of volume in the alloy is controlled during charge discharge cycles. As a result of this control, cracks in the alloy forming the electrode are prevented, and the charge-discharge cycle life of the battery is improved. In the alloy, partial replacement by Mn, Al or the like decreases the equilibrium-pressure of the hydrogen-absorbing alloy. Therefore, the amount of absorbed hydrogen is increased and the discharge capacity of the battery is increased.

Another method of decreasing the equilibrium-pressure in the hydrogen-absorbing alloy having a composition MmBx involves the reduction of the stoichiometric ratio "x" of an amount of element "B" is reduced. For example, Japanese patent publication laid-open No.60-89066 which describes a hydrogen-absorbing alloy represented by a formula ABmCn, and a value of "m+n" in the range from 4.8 to 5.4. Further, Japanese patent publication laid-open No.2-277737 describes a hydrogen-absorbing alloy represented by a formula ANiaCobMnc, and a value of "a+b+c" ranging from 3.85 to 4.78. These methods increase the amount of the absorbed hydrogen in the hydrogen-absorbing electrode.

In manufacturing the hydrogen-absorbing alloy, each component of the alloy is measured and mixed in a fixed ratio, melted in an arc furnace having an inert argon atmosphere, and cooled. The alloys are held in a vacuum furnace and heat treated at high temperature (approximately 1000 °C) during a fixed period of time. This "annealing" heat treatment causes homogenization of the hydrogen-absorbing alloys. For instance, Japanese patent publication laid-open No.62-31947 describes an annealing treatment of the hydrogen-absorbing alloys within the temperature range of 950 °C to 1250 °C.

To complete the electrode, the hydrogen-absorbing alloys are mechanically pulverised into granules having an average granule size of about 50µm or less. The granules are kneaded into a paste with about 10% by weight of powdered polytetrefluorethylene (PTFE) which acts as a binder and a conductive agent. The paste is coated onto a conductive substrate such as a current collector. The current collector is pressed to form the hydrogen-absorbing alloy electrode.

Furthermore, Japanese patent no. 58-46287 describes a hydrogen-absorbing alloy powder and conductive agent which are mixed and sintered, formed into a porous body, which produces the electrode.

However, when batteries are manufactured employing the hydrogen-absorbing alloys mentioned above, polarization of the negative electrode is increased. As a result, the electrode may discharge up to a certain discharge rate, however, it is difficult to discharge over this rate. Accordingly, a voltage drop may be seen in the hydrogen-absorbing electrode. Thus, the discharge rate of initial charge-discharge cycles on these batteries is not sufficient for use and improvement is needed.

Attention is directed to published European Patent Specification NO. EP-A-0468568 which describes an electrochemical cell having a negative electrode, whose electrochemically active material comprises an intermetallic compound having the CaCu₅-structure and being of the type having the composition ABₘ where m exceeds 5.4.

It is a primary object of the present invention is to provide a hydrogen-absorbing electrode with improved electrode characteristics such as high rate discharge characteristics.

According to the present invention, there is provided a hydrogen-absorbing alloy electrode comprising an annealed hydrogen-absorbing alloy having a crystal structure of CaCu₅ and being of the type ABₙ with a non-stoichiometric composition ratio, and a conductive substrate, said annealed hydrogen-absorbing alloy being coated on said conductive substrate, characterised in that said non-stoichiometric ratio ranges from 3.85 to 4.78.

The invention also relates to a method of manufacturing a hydrogen-absorbing alloy electrode as claimed in claim 2.

In the above method annealing may be carried out in a temperature range between 700°C to 1150°C, for example between 900°C to 1100°C.

### BRIEF DESCRIPTION OF THE DRAWINGS

These and other objects, advantages and features of the invention will become apparent from the following description thereof taken in conjunction with the accompanying drawings which illustrate specific embodiments of the invention. In the drawings:
FIG.1 is a cross-sectional illustration of annealed hydrogen-absorbing alloy granules having a non-stoichiometric composition in accordance with the present invention,
FIG.2 is a cross-sectional illustration of non-annealed hydrogen-absorbing alloy granules having a non-stoichiometric composition,
FIG.3 is a graph showing the relationship between the discharge current of an electrode and a voltage drop, after the 1st charging cycle,
FIG.4 is a graph showing the relationship between the discharge current of an electrode and a voltage drop, after the second charging cycle,
FIG.5 is a graph showing the relationship between the charging time and an internal pressure of a battery, in accordance with a second embodiment of the present invention,
FIG.6 is a graph showing the relationship between variation of a stoichiometric ratio and a voltage drop, in accordance with a third embodiment of the present invention,
FIG.7 is a graph showing the relationship between variation of a stoichiometric ratio and a voltage drop, in accordance with a fourth embodiment of the present invention,
FIG.8 is a graph showing the relationship between the annealing temperature and a voltage drop in accordance with a fifth embodiment of the present invention,
FIG.9 is a graph showing the relationship between the annealing temperature and a discharge capacity of an electrode in accordance with a sixth embodiment of the present invention, and
FIG.10 is a graph showing the relationship between variation of a stoichiometric ratio and the discharge capacity of an electrode in accordance with a seventh embodiment of the present invention.

### DETAILED DESCRIPTION OF THE PREFERRED EMBODIMENT

Generally, a non-annealed hydrogen-absorbing alloy comprises an "A-B" composition having a non-stoichiometric composition. The alloy has an A-enriched phase or a B-enriched phase. In the non-annealed state an ABn phase as a main phase, and the A-enriched phase or the B-enriched phase can not be definitively distinguished from the ABn phase. However, in the annealed hydrogen-absorbing alloy having the non-stoichiometric composition of the present invention, the A-enriched phase or the B-enriched phase can be clearly distinguished from the ABn phase.

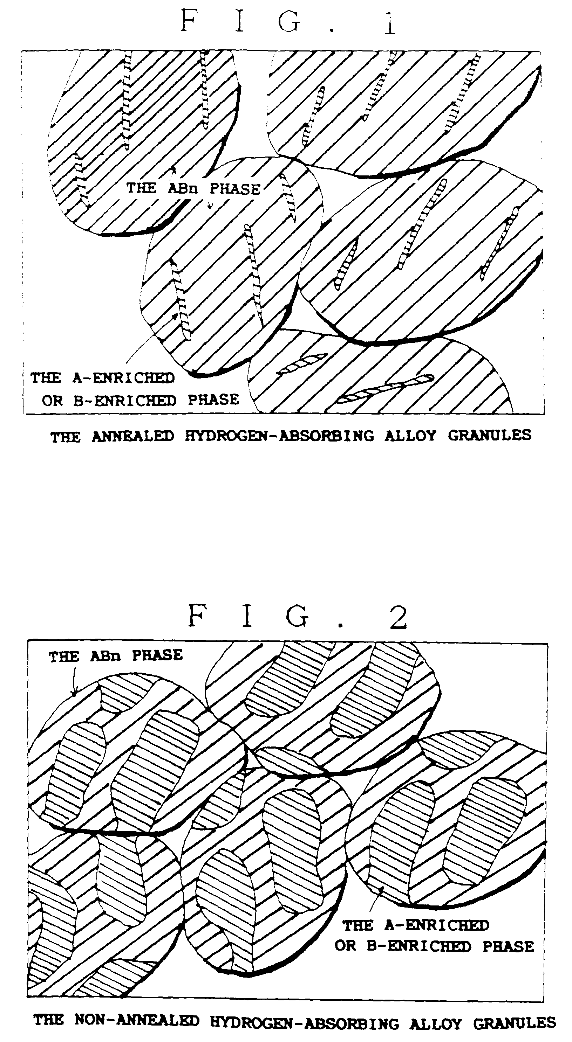

These states are diagrammatically mentioned by using FIG.1 and FIG.2. FIG.1 is a cross-sectional illustration of the annealed hydrogen-absorbing alloy granules, having the non-stoichiometric composition. FIG.2 is a cross-sectional illustration of the non-annealed hydrogen-absorbing alloy granules, having the non-stoichiometric composition. In FIG.1 and FIG.2, hatched portions with thin lines show either the A-enriched phase or the B-enriched phase, while the other hatched portion with bold lines represents the ABn phase as the main phase.

Observing the phase of the non-annealed hydrogen-absorbing alloy having the non-stoichiometric composition in FIG.2, the A-enriched phase or the B-enriched phase is spread out over wide portion of the granule. On the other hand, in the annealed hydrogen-absorbing alloy having the non-stoichiometric composition in FIG.1, the A-enriched phase or the B-enriched phase is cohered into small portion of the granules, and is observed by cracks generated in these small portions.

When an electrode employing the annealed alloy with the non-stoichiometric composition is charged and discharged once, the alloy is expands and shrinks according to absorbing and desorbing characteristics of the hydrogen in the electrode. AS a result, the areas surrounding the A-enriched phase or the B-enriched phase, the generate and grow cracks. The new cracks are generated in the portions contacting an electrolyte, where the electrode reactions proceed. The stress strain in a crystal lattice in these portions of the hydrogen-absorbing alloy is very large, therefore, a surface energy for these portions is increased. Accordingly, the speed of electrode reaction is improved due to the presence of cracks.

In an embodiment of the present invention, "the non-stoichiometric Composition" means that an atom ratio in a composition formula of the hydrogen-absorbing alloy, as a general rule, is not an integral number. ("The stoichiometric composition" means that the atom ratio in the composition formula of the hydrogen-absorbing alloy is an integral number.) In the composition formula ABn, the "n" is substantially equal to 5. Moreover, hydrogen-absorbing alloys having a stoichiometric ratio of n=4.9 or n=5.1 have the electrochemical characteristics similar to the formula AB₅. Accordingly, an alloy whose "n" equals 4.9 or 5.1 is not defined as a non-stoichiometric compositions.

Further, in an embodiment of the present invention, "annealing" means the heat treatment in which the hydrogen-absorbing alloy is held at a certain temperature range for a fixed period of time, and indicates the treatment is able to get rid of the stress strain present in the crystal lattice of the hydrogen-absorbing alloy. Therefore, annealed hydrogen-absorbing alloy has the same meaning as hydrogen-absorbing alloy with annealing or hydrogen-absorbing alloy which is annealed.

### FIRST EMBODIMENT

In a first embodiment, after hydrogen-absorbing-alloys are prepared, the characteristics of electrodes using these alloys are compared. These hydrogen-absorbing alloys have a crystal structure of the CaCu₅ type and are represented by formulas of AB_{4.7}, AB_{5.0} or AB_{5.5}. In these formulas, the "A" is a Mish metal, the "B" consists of Nix and Mny with the ratio of the x:y set to 1:7. The hydrogen-absorbing alloys of these formulas are prepared in both annealed and non-annealed states, resulting in six types of the alloys.

The hydrogen-absorbing alloys are then mechanically pulverized into granules, and classified. The granules are kneaded with nickel powder, a conductive agent, and a powdered PTFE, a binder, into a paste. In each paste, a weight ratio of "hydrogen-absorbing alloy":"conductive agents":"binder" is set at 5:4:1. These mixtures are measured to obtain 1 gram of the hydrogen-absorbing alloy and are wrapped by nickel mesh, a conductive substrate, whereby the hydrogen-absorbing alloy electrodes were produced.

After preparing each electrode, the relationship between the discharge current (mA/g) of the electrode and the voltage drop (mV) of the electrode is tested in an alkaline electrolyte.

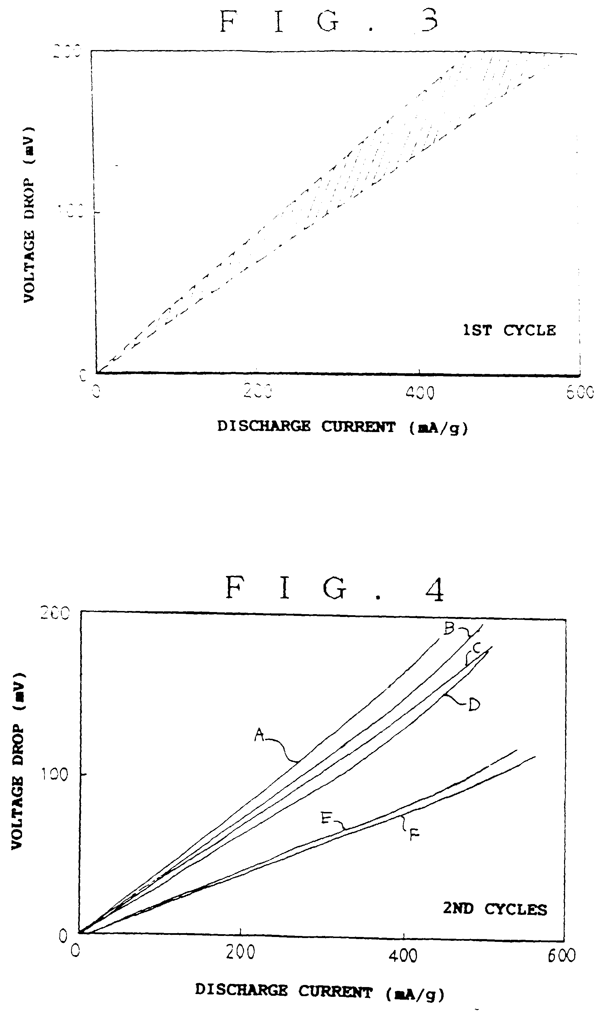

The typical results are shown in FIG.3 and FIG.4. FIG.3 shows the discharge test after a 1st cycle charging, FIG.4 shows the discharge test after a 2nd cycle charging. In FIG.4, line "A" represents a result for an annealed alloy of the formula AB₅ and line "B" represents the result for a non-annealed alloy of the formula AB₅. Line "C" represents the result for a non-annealed alloy of the formula AB_{5.5} and line "D" represents the result for a non-annealed alloy of the formula AB_{4.7}. Line "E" represents the result for an annealed alloy of the formula AB_{5.5} and line "F" represents the result of an annealed alloy of the formula AB_{4.7}.

As shown in FIG.3, the results for these electrodes are sandwiched between the two doted lines. An advantage of annealed alloys is not observed from the 1st cycle. However, as shown in FIG.4, the advantage of the annealed alloys having the non-stoichiometric compositions is observable after 2nd cycle charging. (See the lines "E" and "F".) The proportional increase in the discharge current and the voltage drop is prevented. Therefore, stability of the discharge voltage for the electrode is improved in the annealed alloy having the non-stoichiometric compositions. From these results, in spite of annealing, the hydrogen-absorbing alloy presented by the stoichiometric formula AB_{5.0} discharge characteristics are not improved.

In this embodiment, the powdered PTFE is used as the binder, because the charge-discharge cycles characteristics were considered. It is useful for the binder to bridge-form, preventing the hydrogen-absorbing alloy from falling off the electrode. For example, polyethleneoxide, polyvinylalcohol, methylcellose, carboxymethylcellulose and hydroxypropylcellulose, can be used as a binder, when they are reacted with a hexamethylenediamineisocyanate to bridge-form and build up three-dimensional structures. In this way, the hydrogen-absorbing alloys is effectively prevented from falling off. As a result, the electrode characteristics of discharge capacity, mechanical strength and conductivity can be maintained. Accordingly, the high capacity of the electrode can be retained during the long charge-discharge cycles.

### SECOND EMBODIMENT

In a second embodiment, after a value of "n" is set to 4.70 and 5.50 respectively in a formula composition of ABn, alloys are prepared in both annealed and non-annealed states. The internal pressures of batteries employing these alloys are tested. In this embodiment, the same composition ratio of each element of the hydrogen-absorbing alloy as used in the first embodiment is prepared.

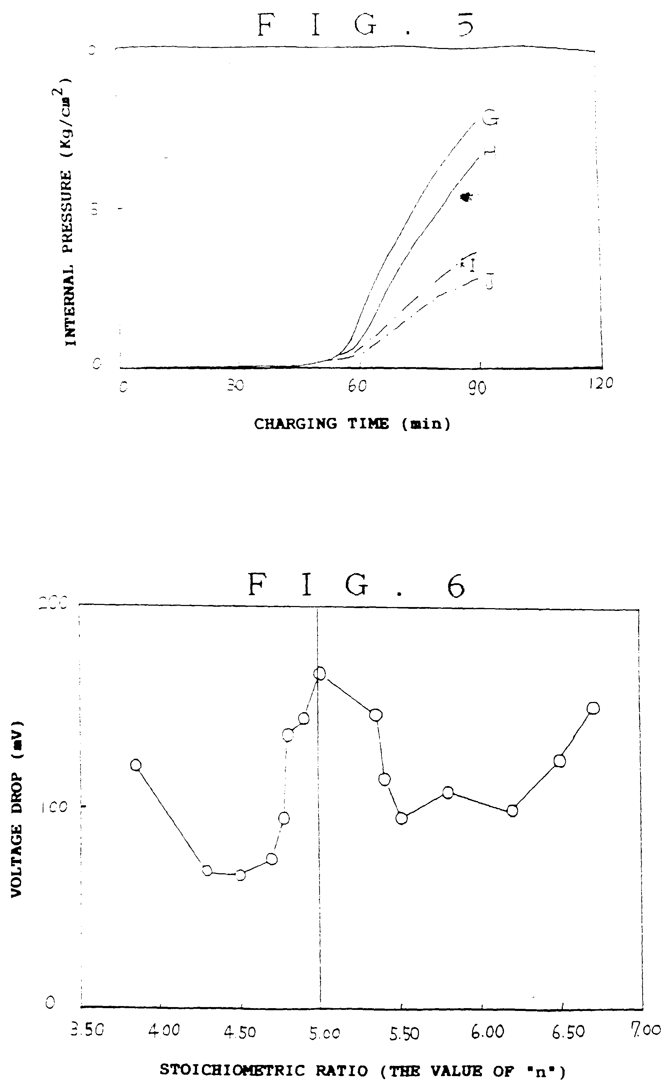

Typical results are shown in FIG.5. FIG.5 shows the relationship between the charging time (min) of the batteries and the change in internal pressure (kg/cm²) for each battery. In FIG.5, line "G" represents a result of a non-annealed alloy of the formula AB_{4.70} and line "H" represents the result of the non-annealed alloy of the formula AB_{5.50}. Line "I" represents the result of an annealed alloy of the formula AB_{4.70} and line "J" represents the result of an annealed alloy of the formula AB_{5.50}.

As shown in FIG.5, the batteries employing annealed alloys (See lines "I" and "J") have reduced the internal pressure in the batteries.

On the other hand, though not shown in FIG.5, the battery equipped with the stoichiometric composition hydrogen-absorbing alloy, despite annealing, does not show reduced internal pressure in the battery.

### THIRD EMBODIMENT

In a third embodiment, the stoichiometric ratio of the hydrogen-absorbing alloy is changed and tested. The same composition ratio of each element of the hydrogen-absorbing alloys as used in the first embodiment are used. In the composition formula ABn the value of "n" is changed in the range between 3.5 to 7.0.

Typical results obtained in the test are shown in FIG.6. FIG.6 shows the relationship between variation of stoichiometric ratio in the hydrogen-absorbing alloy and the voltage drop of the electrode. Testing conditions are to discharge at 400mA/g and to measure the voltage drop of the electrode after the 2nd cycle. Annealing conditions for these hydrogen-absorbing alloy for electrodes is typically set at the temperature of 800 °C for 8 hours in an arc furnace having an inactive argon atmosphere. Typical measuring points for the voltage drop in the electrode are taken for values of "n" in the formula "ABn" set at 3.85, 4.30, 4.50, 4.70, 4.78, 4.80, 4.90, 5.00, 5.35, 5.40, 5.55, 5.80, 6.20, 6.50 and 6.70, respectively. According to FIG.6, the discharge characteristics of the electrode improve when "n" ranges from about 3.85 to about 4.78 and from about 5.40 to about 6.50 in the hydrogen-absorbing alloys.

### FOURTH EMBODIMENT

In a fourth embodiment, the annealing temperatures of the hydrogen-absorbing alloys having the non-stoichiometric compositions are tested. The hydrogen-absorbing alloys having the crystal structure of the CaCu₅ type are represented by the formula such as "Mm(NiaCobAlcMnd)n". In the formula supposing that "Mm" is "A" and "(NiaCobAlcMnd)" is "B", the value of "n" is changed within the range between from 3.5 to 7.0. Further the ratio of "a:b", "a:c" and "a:d" set at 5:1, 18:1 and 6:1.

Typical results are shown in FIG.7. FIG.7 shows the relationship between the variation of the stoichiometric ratio in the hydrogen-absorbing alloy and the voltage drop of the electrode. In the fourth embodiment testing conditions are set to the same as the above-mentioned third embodiment. Measuring points for the value "n" of the formula "ABn" are set at 3.85, 4.00, 4.50, 4.78, 4.82, 5.00, 5.40, 5.50, 6.20, 6.50 and 6.70, respectively. As shown in FIG.7, even if the composition of elements in the hydrogen-absorbing alloys are changed, the discharge characteristics improve when "n" is in the range between about 3.85 to about 4.78 and between about 5.40 to about 6.50.

### FIFTH EMBODIMENT

In a fifth embodiment, the annealing temperatures of the hydrogen-absorbing alloys having the non-stoichiometric compositions are changed and the characteristics of the voltage drop of the electrodes are measured. After the same type of the hydrogen-absorbing alloys as those used in the first embodiment are prepared, in the formula "ABn" the value of the "n" is set 4.70. The relationship between the annealing temperatures in the temperature range between 600 °C to 1200 °C and the degree of the voltage drop (mV) on the discharging electrode is measured.

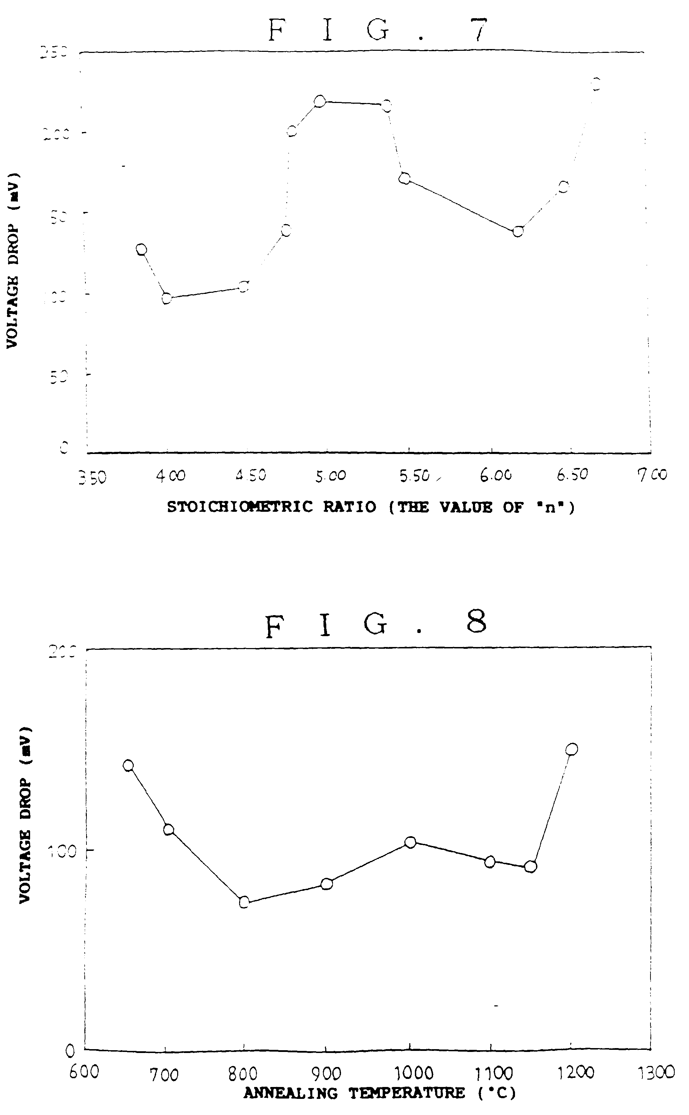

Typical results are shown in FIG.8. FIG.8 shows the relationship between the annealing temperatures and the degree of the voltage drop in the electrode. The voltage drop is shown for the discharging at 400 mA/g after the 2nd cycle.

According to FIG.8, the discharge characteristics of the electrode improve for annealing temperatures ranging between about 700 °C to about 1150 °C.

### SIXTH EMBODIMENT

In a sixth embodiment, the formula of "ABn" has a value of "n" less than 5.0 in the annealed hydrogen-absorbing alloy. The hydrogen-absorbing alloys having the crystal structure of CaCu₅ type are represented by the composition formula of "Mm(NiaCobAlcMnd)n". In the composition formula "Mm" is "A" and "(NiaCobAlcMnd)" is "B", in the formula "ABn" the value of "n" is set to 4.70 in the hydrogen-absorbing alloys. The elements of Ni, Co, Al and Mn are set to a ratio of "a:b", "a:c" and "a:d" having values of 5:1, 18:1 and 6:1, respectively. The annealing temperatures are between 700 °C to 1200 °C and the discharge capacity (mAh/g) of the electrode is measured.

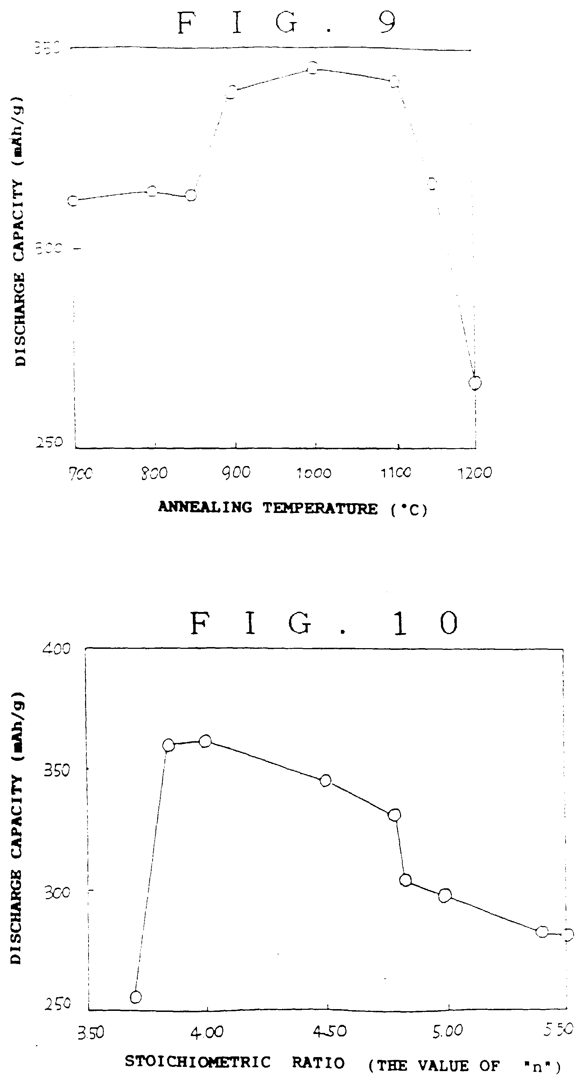

Typical results are shown in FIG.9. FIG.9 shows the relationship between the annealing temperatures of the hydrogen-absorbing alloy and the discharge capacity of the electrode. According to FIG.9, when the value of "n" in the formula "ABn" is set to 4.70, the discharge capacity increases in the annealing temperature range between about 900 °C to about 1100 °C.

### SEVENTH EMBODIMENT

In a seventh embodiment, the hydrogen-absorbing alloys are those used for the above-mentioned sixth embodiment, where the value of "n" in the formula "ABn" is changed in the range between 3.80 to 5.50, which is a variation of the stoichiometric ratio. The discharge capacity (mAh/g) of these hydrogen-absorbing alloy electrodes is measured.

Typical results are shown in FIG. 10 and Table 1. FIG. 10 shows the relationship between the value of "n" in the formula "ABn" and the discharge capacity of the electrode.

**Table 1**

| Value of "n" | Discharge Capacity (mAh/g) |
|---|---|
| 3.80 | 255 |
| 3.85 | 361 |
| 4.00 | 363 |
| 4.50 | 345 |
| 4.78 | 331 |
| 4.82 | 303 |
| 5.00 | 296 |
| 5.40 | 282 |
| 5.50 | 280 |

As shown in FIG.10 and Table 1, when the value of "n" in the formula "ABn" is set in the range between about 3.85 to about 4.78, the discharge capacity of the electrodes is increased.

Accordingly, from results of the above-mentioned sixth and seventh embodiments, when the value of the "n" is set in the range between about 3.85 to about 4.78 and the annealing temperature is set between about 900 °C to about 1100 °C, the discharge capacity of the hydrogen-absorbing electrodes is remarkably increased.

In the above embodiments of the present invention, a nickel mesh is used as a conductive substrate, however, needless to say, other types of conductive substrates, such as a foamed metal substrate, a metal fiber substrate, a metal mesh and a punched metal plate are available.

## Claims

1. A hydrogen-absorbing alloy electrode comprising an annealed hydrogenabsorbing alloy having a crystal structure of CaCu₅ and being of the type ABₙ with a non-stoichiometric composition ratio, and a conductive substrate, said annealed hydrogen-absorbing alloy being coated on said conductive substrate, characterized in that said non-stoichiometric composition ratio ranges from 3.85 to 4.78.

2. A method of manufacturing a hydrogen-absorbing alloy electrode comprising the steps of preparing a hydrogen-absorbing alloy having a crystal structure of CaCu₅ and being of the type ABₙ with a non-stoichiometric composition ratio; annealing said hydrogen-absorbing alloy; pulverising said annealed hydrogen-absorbing alloy; mixing said pulverised, annealed hydrogen-absorbing alloy and a binder into a paste, and coating the paste on a conductive substrate, characterized in that said non-stoichiometric composition ratio ranges from 3.85 to 4.78.

3. A method according to claim 2, wherein the annealing is carried out at a temperature ranging from about 700°C to about 1150°C.

4. A method according to claim 3, wherein the annealing is carried out at a temperature ranging from about 900°C to about 1100°C.

## Revendications

1. Electrode en alliage absorbant l'hydrogène, comprenant un alliage absorbant l'hydrogène ayant subi un recuit possédant une structure cristalline de type CaCu₅ et étant du type ABₙ avec un rapport de composition non stoechiométrique, ainsi qu'un substrat conducteur, ledit substrat conducteur étant enduit avec ledit alliage absorbant l'hydrogène ayant subi un recuit, caractérisée en ce que ledit rapport de composition non stoechiométrique se situe dans le domaine de 3,85 à 4,78.

2. Procédé de fabrication d'une électrode en alliage absorbant l'hydrogène, comprenant les étapes consistant à préparer un alliage absorbant l'hydrogène possédant une structure cristalline de type CaCu₅ et étant du type ABn avec un rapport de composition non stoechiométrique; soumettre à un recuit ledit alliage absorbant l'hydrogène; pulvériser ledit alliage absorbant l'hydrogène ayant subi un recuit; mélanger ledit alliage pulvérisé absorbant l'hydrogène ayant subi un recuit et un liant pour obtenir une pâte; et enduire un substrat conducteur avec la pâte, caractérisé en ce que ledit rapport de composition non stoechiométrique se situe dans le domaine de 3,85 à 4,78.

3. Procédé selon la revendication 2, dans lequel on effectue le recuit à une température qui se situe dans le domaine d'environ 700°C à environ 1150°C.

4. Procédé selon la revendication 3, dans lequel on effectue le recuit à une température qui se situe dans le domaine d'environ 900°C à environ 1100°C.

## Patentansprüche

1. Elektrode aus Wasserstoff absorbierender Legierung, bestehend aus einer geglühten, Wasserstoff absorbierenden Legierung, die eine CaCu₅-Kristallstruktur aufweist und zum ABₙ-Typ mit einer Zusammensetzung im nichtstöchiometrischen Verhältnis gehört, sowie aus einem leitfähigen Substrat, wobei die geglühte Wasserstoff absorbierende Legierung auf das leitfähige Substrat aufgestrichen ist, dadurch gekennzeichnet, daß das nichtstöchiometrische Verhältnis der Zusammensetzung im Bereich zwischen 3,85 und 4,78 liegt.

2. Verfahren zur Herstellung einer Elektrode aus Wasserstoff absorbierender Legierung, das folgende Schritte umfaßt: Zubereitung einer Wasserstoff absorbierenden Legierung, die eine CaCu₅-Kristallstruktur aufweist und zum ABₙ-Typ mit einer Zusammensetzung im nichtstöchiometrischen Verhältnis gehört; Glühen der Wasserstoff absorbierenden Legierung; Zerkleinern der geglühten, Wasserstoff absorbierenden Legierung zu Pulver; Mischen dieser zu Pulver zerkleinerten, geglühten, Wasserstoff absorbierenden Legierung und eines Bindemitttels zu einer Paste und Aufstreichen der Paste auf ein leitfähiges Substrat, dadurch gekennzeichnet, daß das nichtstöchiometrische Verhältnis der Zusammensetzung im Bereich zwischen 3,85 und 4,78 liegt.

3. Verfahren nach Anspruch 2, bei dem das Glühen bei einer Temperatur im Bereich zwischen ca. 700°C und ca. 1150°C durchgeführt wird.

4. Verfahren nach Anspruch 3, bei dem das Glühen bei einer Temperatur im Bereich zwischen ca. 900°C und ca. 1100°C durchgeführt wird.
